# EUROPEAN PATENT APPLICATION

(11) **EP 1 303 115 A2**
(43) Date of publication of application: **16.04.2003**
(21) Application number: 02022971.2
(22) Date of filing: 14.10.2002
(51) Int. Cl.: H04M 1/65, H04M 1/725

(54) **Information terminal apparatus, communications method, and storage medium storing program therefor**

(30) Priority: 12.10.2001 JP 2001314760
(71) Applicant: NEC CORPORATION, Tokyo (JP)
(72) Inventor: Hosomi, Takahiro, Minato-ku, Tokyo (JP)
(74) Representative: VOSSIUS & PARTNER

(57) **Abstract**

A mobile telephone terminal simplifies a call connecting process, reduces the load in switching lines, requesting a communications carrier to set an available service, etc. without a monthly fee, etc. for each service and without increasing a dedicated lines when a service is offered.

The control unit determines the state of an incoming call from other users, the states of communications, disconnection, etc. with,other units according to the embodiment of the present invention according to a signal from the reception/demodulation/decoding unit, determines the transmission state, etc. of a call to others and a phone-answering message recording information message according to a signal from the transmission/modulation/coding unit, and controls the audio mixer units, the receiver, the audio recorders, the distributor, the voice generators, and the switches (SW#1 to SW#10) depending on the determination result.

## Description

The present invention relates to an information terminal apparatus, and a communications method and a storage medium storing a program for the apparatus, and more specifically to providing various services to an information terminal apparatus such as a mobile telephone terminal, telephone terminal, etc. connected to a communications network through wired and wireless systems.

Conventionally, a telephone terminal including a mobile telephone terminal, etc. provides various services such as a voice message record service in an off-hook state or in communication, an interruptive communications service, a threesome communications service, etc.

The interruptive communications service refers to a service in which when an incoming call is received from a third party during communications between two terminals, the communications are suspended and switched into the communications for the newly received call. The threesome communications service enables three users to communicate with one another by a user calling one of two other users in communication.

In the above mentioned various services, for example, in the case shown in FIG. 7, when the threesome communications service is used by calling a mobile station D3 while mobile stations D1 and D2 are communicating with each other, the call is connected from the mobile station D1 to the mobile station D3 through a path from the mobile station D1, a base station C1, a base station control station B1, a switch A, a base station control station B3, a base station C3, and the mobile station D3.

In this case, if the mobile station D1 subscribes to the threesome communications service, the switch A performs the process of transferring the voice from the mobile stations D2 and D3 to the mobile station D1, and the voice from the mobile stations D1 and D3 to the mobile station D2, and the voice from the mobile stations D1 and D2 to the mobile station D3, thereby establishing the communications among the mobile stations D1 to D3. Similarly, the voice message record service and the interruptive communications service can also be provided in the process performed by the switch A if the mobile stations D1 to D3 subscribe to the services.

On the other hand, the interruptive communications service, etc. provided using a PHS (personal handyphone system) without performing the process by a switch is disclosed by JP-A- 11-252253 and JP-A-2000-165520

In the above mentioned conventional telephone terminal, various services such as the voice message record service, the interruptive communications service, the threesome communications service, etc. are realized by a circuit switch on the network side. Therefore, the configuration of the network is complicated, and a heavy load is charged in the circuit switching process performed on the network side.

Furthermore, on the telephone terminal side, the above mentioned various services are used by requesting a communications carrier to set an available service, thereby requiring a monthly fee, etc. for each service.

On the other hand, in the above mentioned laid-open technologies, the interruptive communications service using the PHS is realized without the process by a switch, which is based on the feature that, in the PHS, a mobile telephone terminal can access a plurality of radio base station. In this system, if one call is connect while another call is being held, then one mobile terminal occupies two lines.

The present invention has been developed to solve the above mentioned problems, and aims at providing an information terminal apparatus and a communications method and a program for use with the information terminal apparatus capable of simplifying a call connecting process, reducing the load in switching lines, requesting a communications carrier to set an available service, etc. without a monthly fee, etc. for each service and without increasing a dedicated lines when a service is offered.

An information terminal apparatus according to the present invention is an information terminal apparatus, for communicating with another terminal by means of multiplexed communication that provides communication from one terminal through a plurality of lines, and includes: message record servicing means, in an off-hook state or in communication, for freely recording a message from a calling terminal; and interruptive communications servicing means for freely communicating with a further terminal while communicating with another terminal.

In addition to the above mentioned configuration, another information terminal apparatus according to the present invention is provided with plural users communications servicing means for freely communicating with a plurality of terminals.

Another information terminal apparatus according to the present invention is an information terminal apparatus, for communicating with another terminal by means of multiplexed communication that provides communication from one terminal through a plurality of lines, and includes: message record servicing means, in an off-hook state or in communication, for freely recording a message from a calling terminal; and plural users communications servicing means for freely communicating among a plurality of terminals.

A communications method according to the present invention is a communications method using an information terminal apparatus, for communicating with another terminal by means of multiplexed communication that provides communication from one terminal through a plurality of lines, and includes: a step, in an off-hook state or in communication, of offering a message record service for freely recording a message from a calling terminal; and a step of offering an interruptive communications service for freely communicating with a further terminal while communicating with the other terminal.

In addition to the above mentioned steps, another communications method according to the present invention includes a step of offering a plural users communications service of freely communicating with a plurality of terminals.

Another communications method according to the present invention is a communications method using an information terminal apparatus, for communicating with another terminal by means of multiplexed communication that provides communication from one terminal through a plurality of lines, and includes:
a step, in an off-hook state or in communication, of offering a message record service for freely recording a message from a calling terminal; and a step of offering a plural users communications service for freely communicating among a plurality of terminals.

A storage medium storing a program for the communications method according to the present invention stores a program of a communications method using an information terminal apparatus, for communicating with another terminal by means of multiplexed communication that provides communication from one terminal through a plurality of lines, and directing a computer to perform:
a process, in an off-hook state or in communication, of offering a message record service for freely recording a message from a calling terminal; and a process of offering an interruptive communications service for freely communicating with a further terminal while communicating with another terminal.

In addition to the above mentioned process, another storage medium storing a program for the communications method according to the present invention stores a program to direct the computer to perform a process of offering a plural users communications service for freely communicating among a plurality of terminals.

Another storage medium storing a program for the communications method according to the present invention stores a program of a communications method using an information terminal apparatus, for communicating with another terminal by means of multiplexed communication that provides communication from one terminal through a plurality of lines, and directing a computer to perform: a process, in an off-hook state or in communication, of offering a message record service for freely recording a message from a calling terminal; and a process of offering a plural users communications service for freely communicating among a plurality of terminals.

That is, the information terminal apparatus according to the present invention can realize various services such as a voice message record service, an interruptive communications service, a plural users communications service, etc. in the off-hook state or in communication in the communications system capable of establishing multiplexed communications such as a multicalling capability, etc. by which one terminal can establish communications through a plurality of lines without increasing dedicated lines independent of the equipment on the network side. In this case, a switch and a base station do not return 'busy' to multiple calls to the same terminal, but the calls can be transmitted as is to the terminal.

Thus, it is not necessary for a user to request a communications carrier to set various services. For example, it is not necessary to pay a monthly fee, etc. for each of the various services.

Furthermore, since various services can be freely switched and set on the terminal side, the value added of a terminal can be enhanced, and these capabilities can be transferred from the network side to the terminal side, thereby simplifying the call connecting process when a service is offered, reducing the laborious processes such as changing settings by a user request, etc. As a result, high cost performance can be achieved in designing and maintaining a network.

The embodiments of the present invention are described below by referring to the attached drawings.
FIG. 1 is a block diagram of the configuration of the information terminal apparatus according to an embodiment of the present invention;
FIG. 2 is a block diagram of the configuration of the mobile telephone terminal according to an embodiment of the present invention;
FIG. 3 is a flowchart of the operation of the mobile telephone terminal according to an embodiment of the present invention;
FIG. 4 is a flowchart of the operation of the mobile telephone terminal according to an embodiment of the present invention;
FIG. 5 is a flowchart of the operation of the mobile telephone terminal according to an embodiment of the present invention;
FIG. 6 shows the connection state of each switch shown in FIG. 1; and

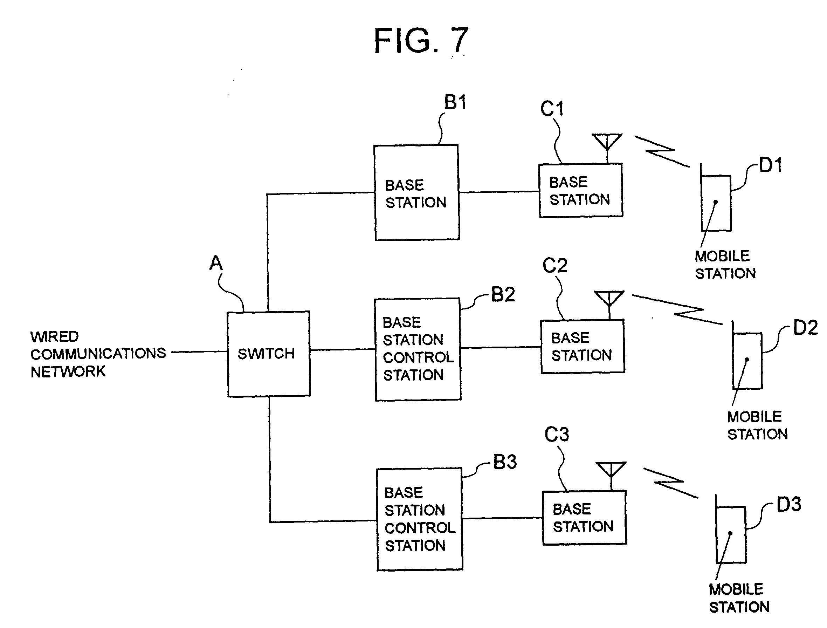

FIG. 7 is a block diagram of an example of the configuration of the conventional mobile communications system.

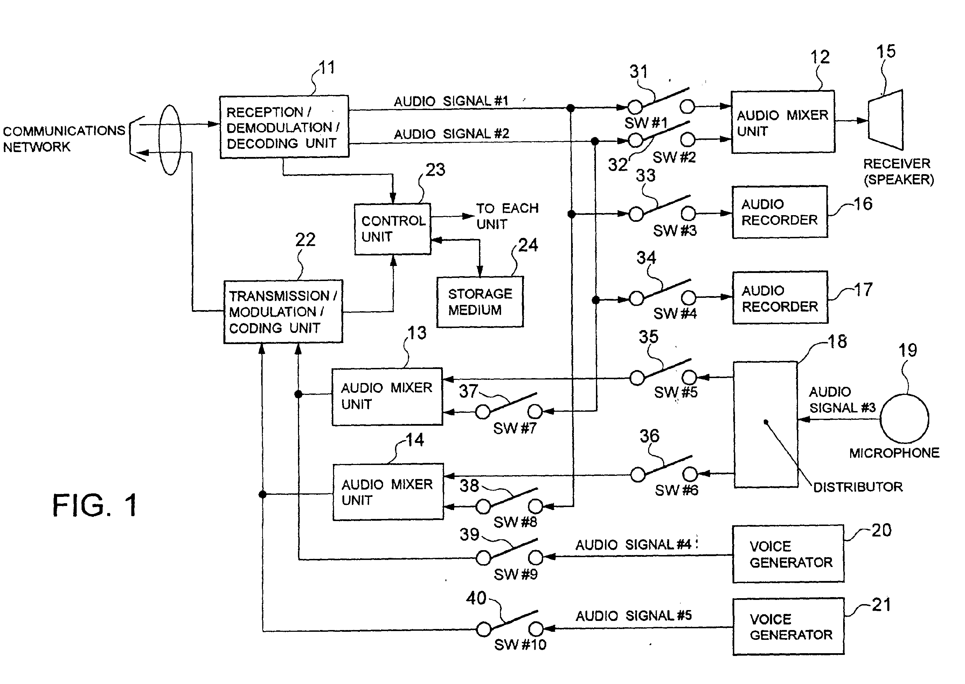

FIG. 1 is a block diagram of the configuration of the information terminal apparatus according to an embodiment of the present invention. In FIG. 1, the information terminal apparatus according to an embodiment of the present invention comprises a reception/demodulation/decoding unit 11, audio mixer units 12 to 14, a receiver 15, audio recorders 16 and 17, a distributor 18, a microphone 19, voice generators 20 and 21, a transmission/modulation/coding unit 22, a control unit 23, a storage medium 24, and switches (SW#1 to SW#10) 31 to 40.

The information terminal apparatus according to an embodiment of the present invention is applied to a communications system capable of performing multiplexed communications using a multicalling capability, etc. by which one terminal can establish communications through a plurality of lines.

Regardless of a wired or wireless circuit in the multiplexed communications, a circuit for a terminal is to establish communications through a plurality of lines using a PHS (personal handyphone system), aTDMA (time division multiple access) system, a CDMA (code division multiple access) system, W-CDMA (wideband-CDMA) system, etc.

In this case, the communications through a plurality of lines can be performed as 'audio + audio', 'audio + data', 'data + data', etc. For example, in the CDMA system, 'AMR (advanced multi-rate) + AMR', 'AMR + UDI (unrestricted digital)', 'UDI + UDI', etc. can be used. The AMR is an audio coding system specified by the 3GPP (third generation partnership projects) TSG-SA.

The information terminal apparatus according to an embodiment of the present invention is used in the above mentioned multiplexed communications so that a user can arbitrarily set various services such as the voice message record service, the interruptive communications service, the plural users communications service, etc. on the terminal side without a communications carrier setting the above mentioned services on the network in the off-hook state or in communication. In this case, the switch and the base station can transmit overlapping calls to the same terminal without setting them as busy.

FIG. 1 shows a terminal for use in a communications system capable of receiving two calls according to an embodiment of the present invention. A service of a plurality of calls, that is, three or more calls can also be realized by extending the configuration on the terminal side.

The configuration of the information terminal apparatus according to an embodiment of the present invention is obtained by adding to the conventional configuration not shown in the attached drawings: the three audio mixer units 12 to 14, the two audio recorders 16 and 17, the two voice generators 20 and 21, the distributor 18, the ten switches (SW#1 to SW#10) 31 to 40.

Since the information terminal apparatus according to an embodiment of the present invention corresponds to the multiplexed communications, the reception/demodulation/decoding unit 11 decodes a received condition from a wired or wireless communications network, and outputs two audio signals (#1 and #2). Furthermore, the transmission/modulation/coding unit 22 codes two audio signals (#4 and #5) and transmits them to the wired or wireless communications network.

The control unit 23 executes a program from the storage medium 24, controls each of the above mentioned units, determines the state of an incoming call from other users to the information terminal apparatus, the states of communications, disconnection, etc. with other units according to the embodiment of the present invention according to a signal from the reception/demodulation/decoding unit 11, determines the transmission state, etc. of a call toothers and a phone-answering message recording information message according to a signal from the transmission/modulation/coding unit 22, and controls the audio mixer units 12 to 14, the receiver 15, the audio recorders 16 and 17, the distributor 18, the voice generators 20 and 21, and the switches (SW#1 to SW#10) 31 to 40 depending on the determination result.

The control line from the control unit 23 to the audio mixer units 12 to 14, the receiver 15, the audio recorders 16 and 17, the distributor 18, the voice generators 20 and 21, the switches (SW#1 to SW#10) 31 to 40 is omitted.

In the 'two users in communication' state, the control unit 23 sets the switch (SW#1) 31 and the switch (SW#5) 35 in the ON position, or sets the switch (SW#2) 32 and the switch (SW#6) 36 in the ON position, and the one-to-one voice communications is enabled with one call issued. The 'two users in communication' state is a one-to-one communications state with one call issued.

In the 'three users in communication' state, the control unit 23 sets the switch (SW#1) 31, the switch (SW#2) 32, the switch (SW#5) 35, the switch (SW#6) 36, the switch (SW#7) 37, and the switch (SW#8) 38 in the ON position, and the audio signals #1 and #2 are compounded by the audio mixer unit 12 through the switch (SW#1) 31 and the switch (SW#2) 32. The compounded voice is heard by the user through the receiver 15. The 'three users in communication' state is the state in which three users are simultaneously communicating with two calls issued.

The control unit 23 allows the audio signal #3 of the user to be input into the audio mixer units 13 and 14 from the microphone 19 through the distributor 18, the switch (SW#5) 35, and the switch (SW#6) 36. Furthermore, the control unit 23 allows the audio signal #1 to be compounded with the audio signal #3 by the audio mixer unit 14 through the switch (SW#8) 38, and transmitted to the call with the audio signal #2.

Furthermore, the control unit 23 allows the audio signal #2 to be compounded with the audio signal #3 by the audio mixer unit 13 through the switch (SW#7) 37, and to be transmitted to the call with the audio signal #1. Thus, the user can simultaneously hear the voice of the two users in communication, and the two users in communication can also simultaneously hear the voice of the user and another party.

In the 'phone-answering message recording information message' state, a call is issued, and the control unit 23 sets the switch (SW#9) 39 and the switch (SW#10) 40 in the ON position, generates a 'phone-answering message recording information message' from the object network 20 or the noun object 21, and allows the message to be transmitted to the user of the call as the audio signal #4 or the audio signal #5. The 'phone-answering message recording information message' state refers to transmitting a 'phone-answering message recording information message' such as 'I cannot answer your phone now. Please leave your message after the beep. - a beep -', etc. in response to the user who has issued an incoming call.

In the case of the 'one user is recording a phone-answering message' state, the control unit 23 sets the switch (SW#3) 33 or the switch (SW#4) 34 in the ON position, and allows the audio signal #1 or the audio signal #2 to be input into the audio recorder 16 or the audio recorder 17 for recording. The 'one user is recording a phone-answering message' state refers to a user recording voice as a recording phone-answering message on the terminal of the user.

In the 'user is recording phone-answering message while a phone-answering message recording information message is transmitted to another user' state, the control unit 23 sets the switch (SW#4) 34 and the switch (SW#9) 39 in the ON position, or sets the switch (SW#3) 33 and the switch (SW#10) 40 in the ON position, and records the phone-answering message using a call by the audio recorder 16 or the audio recorder 17 through the switch (SW#3) 33 or the switch (SW#4) 34. Using another call, the 'phone-answering message recording information message' is transmitted to a user on the other end of the phone from the voice generator 20 or the voice generator 21 through the switch (SW#10) 40 or the switch (SW#9) 39. In the 'user is recording phone-answering message while a phone-answering message recording information message is transmitted to another user' state, two calls are issued. That is, one user records a phone-answering message, and another user is listening the 'phone-answering message recording information message'.

In the 'two users are simultaneously recording phone-answering messages' state, the control unit 23 sets both switch (SW#3) 33 and switch (SW#4) 34 in the ON position, and the audio signals #1 and #2 are recorded by the audio recorders 16 and 17 through the switch (SW#3) 33 and the switch (SW#4) 34 respectively. In the 'two users are simultaneously recording phone-answering messages' state, two calls are issued, and two users are simultaneously and individually recording the respective phone-answering messages.

In the 'ringing tone from a third user while two users are in communication' state, the control unit 23 sets the switch (SW#1) 31, the switch (SW#2) 32, and the switch (SW#5) 35 in the ON position, or sets the switch (SW#1) 31, the switch (SW#2) 32, and the switch (SW#6) 36 in the ON position. In the 'ringing tone from a third user while two users are in communication' state, two calls are issued. That is, one call is in the 'two users in communication' state, and another call is in the state of being called by a third user.

In the communicating state call, the audio signal #1 or the audio signal #2 is transmitted from the receiver 15 to the user through the switch (SW#1) 31 or the switch (SW#2) 32, and the audio signal #3 of the user is transmitted from the microphone 19 to the user on the other end of the phone through the distributor 18 and the switch (SW#5) 35 or the switch (SW#6) 36.

At this time, if the voice of the call in the communicating state is the audio signal #1, then the ringing tone is the audio signal #2, and is compounded with the audio signal #1 by the audio mixer unit 12 through the switch (SW#2) 32, and then transmitted from the receiver 15 to the user.

If the voice of the call in the communicating state is the audio signal #2, then the ringing tone is the audio signal #1, and is compounded with the audio signal #2 by the audio mixer unit 12 through the switch (SW#1) 31, and transmitted from the receiver 15 to the user.

In the 'third user is receiving a hold tone while two users are in communication' state, the control unit 23 sets the switch (SW#1) 31, the switch (SW#5) 35, and the switch (SW#10) 40 in the ON position, or the switch (SW#2) 32, the switch (SW#6) 36, and the switch (SW#9) 39 in the ON position. In the 'third user is receiving a hold tone while two users are in communication' state, one call is in the 'two users in communication' state, and a hold tone is transmitted to the user of another call on the other end of the phone.

In the call in the communicating state, the audio signal #1 or the audio signal #2 are transmitted from the receiver 15 to the user through the switch (SW#1) 31 or the switch (SW#2) 32, and the audio signal #3 of the user is transmitted from the microphone 19 to the user on the other end of the phone through the switch (SW#5) 35 or the switch (SW#6) 36. For the calls on hold, a hold tone is transmitted as the audio signal #4 or the audio signal #5 to a call not in communication from the voice generator 20 or the voice generator 21 to the switch (SW#9) 39 or the switch (SW#10) 40.

In the 'third user is receiving phone-answering message recording information message while two users are in communication' state, the control unit 23 sets the switch (SW#1) 31, the switch (SW#5) 35, and the switch (SW#10) 40 in the ON position, or set the switch (SW#2) 32, the switch (SW#6) 36, and the switch (SW#9) 39 in the ON position. In the 'third user is receiving phone-answering message recording information message while two users are in communication' state, one call is in the 'two users in communication' state, and another call is in the 'phone-answering message recording information message' state with a message such as a 'Now in communication. Please leave your message after the beep. -a beep-'.

In the call in the communicating state, the audio signal #1 or the audio signal #2 is transmitted from the receiver 15 to the user through the switch (SW#1) 31 or the switch (SW#2) 32, and the audio signal #3 of the user is transmitted from the microphone 19 to the user on the other end of the phone through the distributor 18 and the switch (SW#5) 35 or the switch (SW#6) 36.

For the calls on hold, a hold tone is transmitted as the audio signal #4 or the audio signal #5 to a call not in communication from the voice generator 20 or the voice generator 21 through the switch (SW#9) 39 or the switch (SW#10) 40.

In the 'third user is recording a phone-answering message while two users are in communication' state, the control unit 23 sets the switch (SW#1) 31, the switch (SW#4) 34, and the switch (SW#5) 35 in the ON position, or sets the switch (SW#2) 32, the switch (SW#3) 33, and the switch (SW#6) 36 in the ON position. In the 'third user is recording a phone-answering message while two users are in communication' state, one call is in the 'two users in communication' state, and the third user of another call is in the phone-answering message recording state.

In the call in the communicating state, the audio signal #1 or the audio signal #2 is transmitted from the receiver 15 to the user through the switch (SW#1) 31 or the switch (SW#2) 32, and the audio signal #3 of the user is transmitted from the microphone 19 to the user on the other end of the phone through the distributor 18 and the switch (SW#5) 35 or the switch (SW#6) 36.

The phone-answering message recording voice is recorded on the audio recorder 17 through the switch (SW#4) 34 if the audio signal from the user on the other end of the phone in the communicating state is transmitted through the switch (SW#1) 31, and recorded on the audio recorder 16 through the switch (SW#3) 33 if the audio signal from the user on the other end of the phone in the communicating state is transmitted through the switch (SW#2) 32.

Thus, in the communications system capable of performing multiplexed communications, various services such as the voice message record service, the interruptive communications service, the plural users communications service, etc. can be realized in communication only by the terminal using the above mentioned information terminal apparatus independent of the equipment on the network side.

Thus, it is not necessary for a user to request a communications carrier to set any of various services. For example, it is not necessary to pay a monthly fee, etc. for each of the services.

Furthermore, since various services can be arbitrarily switched and combined on the terminal side, the value added of a terminal can be enhanced, and the functions can be transferred from a network to a terminal, thereby simplifying a call connecting process in offering various services, and reducing laborious processes of changing settings at a request of a user, etc. As a result, high cost performance can be achieved in designing and maintaining a network.

Therefore, according to the present embodiment, a call connecting process performed when various services are offered can be simplified, and the load charged when lines are exchanged can be reduced, thereby requiring no request to a communications carrier to set a useful service or no payment of monthly fee for each of the various services.

Furthermore, by adding these functions to a mobile telephone terminal, the value added to the terminal can be enhanced, thereby greatly contributing to the CS (customer satisfaction) of a user.

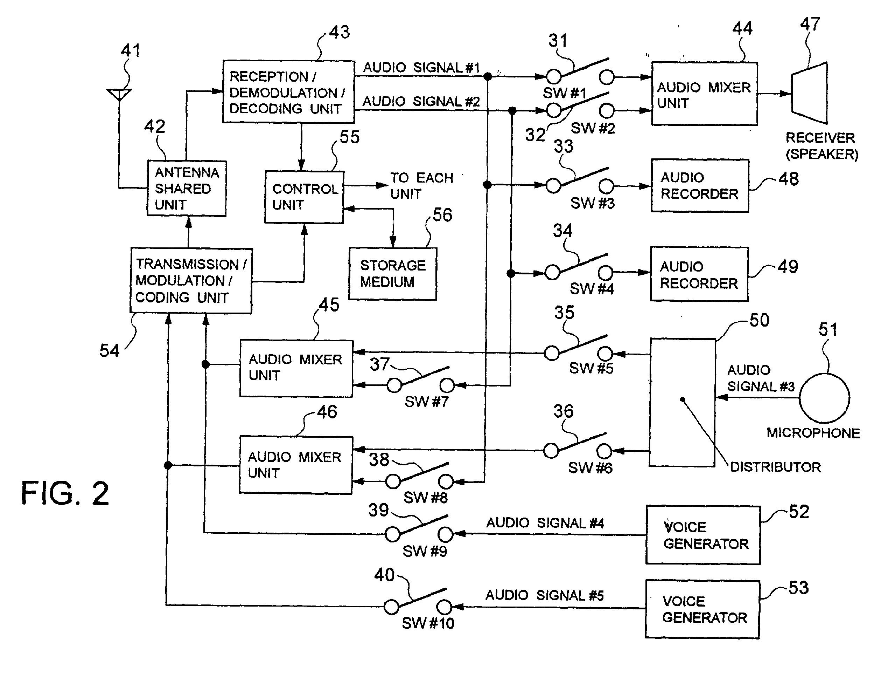

FIG. 2 is a block diagram of the configuration of the mobile telephone terminal according to an embodiment of the present invention. In FIG. 2, the mobile telephone terminal according to an embodiment of the present invention comprises an antenna 41, an antenna shared unit 42, a reception/demodulation/decoding unit 43, audio mixer units 44 to 46, a receiver (speaker) 47, audio recording units 48 and 49, a distributor 50, a microphone 51, voice generator 52 and 53, a transmission/modulation/coding unit 54, a control unit 55, a storage medium 56, and the switches (SW#1 to SW#10) 31 to 40.

The mobile telephone terminal according to an embodiment of the present invention is used in a communications system having the multicalling capability by which one terminal can establish communications through a plurality of lines, and the user can arbitrarily set various services such as the voice message record service, the interruptive communications service, the plural users communications service, etc. on the terminal side in the off-hook state or in communication without a communications carrier setting these services on the network side.

FIG. 2 shows a terminal used in the communications system capable of receiving two calls according to an embodiment of the present invention. By extending the configuration of a terminal, a service of issuing three or more calls can be provided.

The configuration of the mobile telephone terminal according to the present embodiment is obtained by adding to the conventional configuration not shown in the attached drawings the three audio mixer units 44 to 46, the two audio recording units 48 and 49, the two voice generator 52 and 53, the distributor 50, and the ten switches (SW#1 to SW#10) 31 to 40).

Since the mobile telephone terminal according to the present embodiment corresponds to the multicalling capability, two audio signals (#1 and #2) are output from the reception/demodulation/decoding unit 43. Furthermore, the transmission/modulation/coding unit 54 converts the two audio signals #4 and #5 into high frequency signals and transmits them to the antenna shared unit 42.

The control unit 55 executes the program stored in the storage medium 56, controls each of the above mentioned units, determines the state of an incoming call from other users to the mobile telephone terminal, the states of communications, disconnection, etc. with other units according to the embodiment of the present invention according to a signal from the reception/demodulation/decoding unit 43, determines the transmission state, etc. of a call to others and a phone-answering message recording information message according to a signal from the transmission/modulation/coding unit 54, and controls the audio mixer units 44 to 46, the receiver 47, the audio recorders 48 and 49, the distributor 50, the voice generators 52 and 53, and the switches (SW#1 to SW#10) 31 to 40 depending on the determination result.

The control line from the control unit 55 to the audio mixer units 44 to 46, the receiver 47, the audio recorders 48 and 49, the distributor 50, the voice generators 52 and 53, the switches (SW#1 to SW#10) 31 to 40 is omitted.

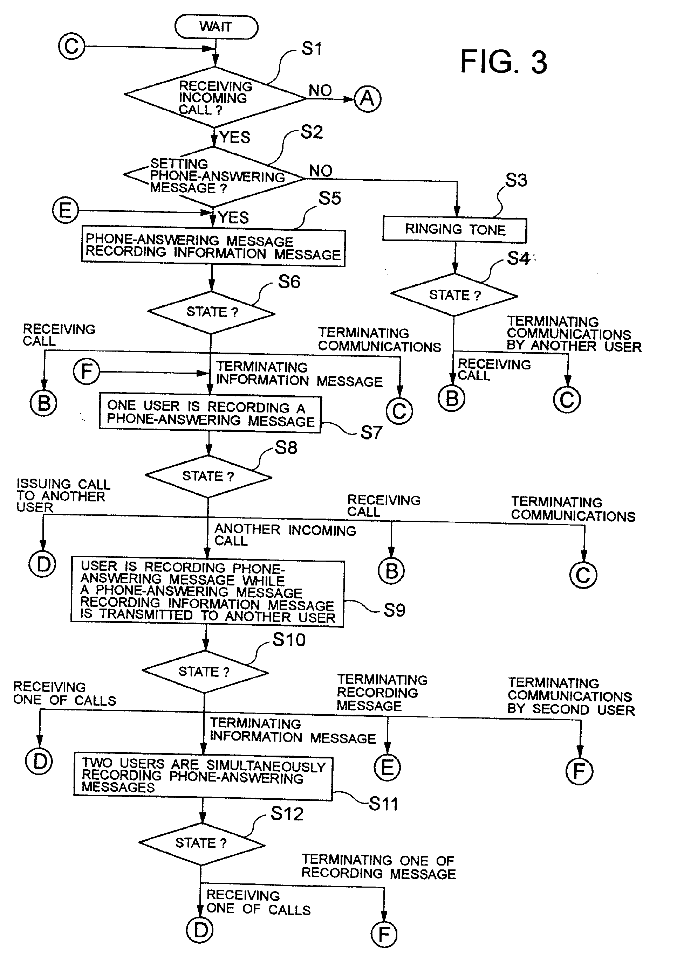

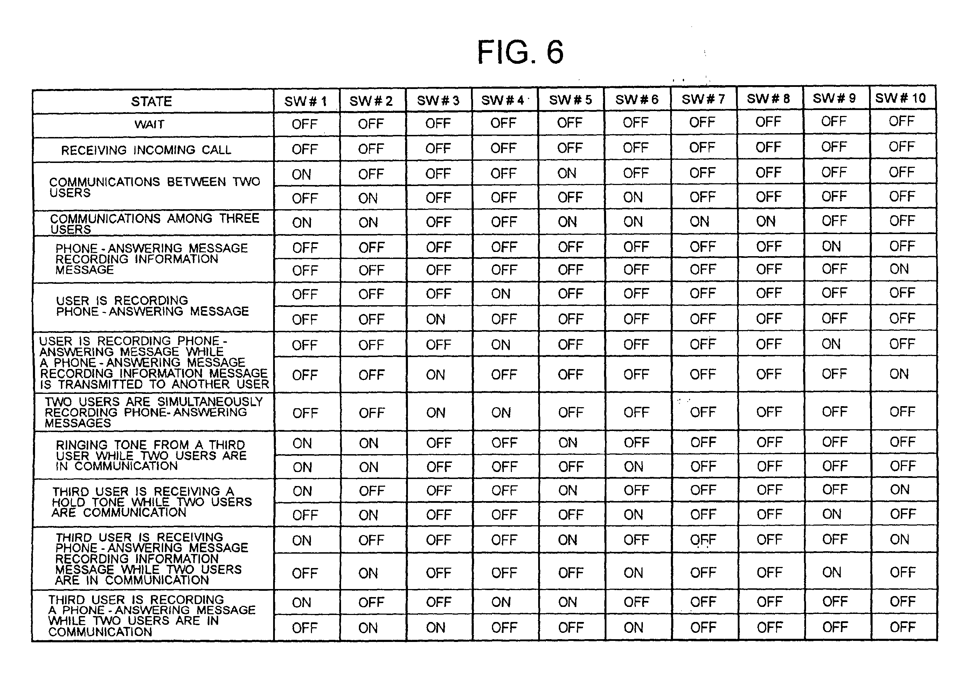

FIGS. 3 to 5 are flowcharts of the operations of the mobile telephone terminal according to an embodiment of the present invention. FIG. 6 shows the connection state of each of the switches (SW#1 to SW#10) 31 to 40 shown in FIG. 1. The operation of the mobile telephone terminal according to the present embodiment is described below by referring to FIGS. 2 to 6. The process shown in FIGS. 3 to 5 is realized by the control unit 55 executing the program stored in the storage medium 56.

The voice message record service, the interruptive communications service, etc. can be set in the ON and OFF positions in the off-hook state for the mobile telephone terminal according to the present embodiment.

FIG. 6 show two settings in the upper and lower sequences for each of the states of 'two users in communication', 'phone-answeringmessage recording information message', 'auser is recording phone-answering message', 'a user is recording phone-answering message while a phone-answering message recording information message is transmitted to another user', 'ringing tone from a third user while two users are in communication', 'third user is receiving a hold tone while two users are in communication', 'third user is receiving phone-answering message recording information message while two users are in communication', and 'third user is recording a phone-answering message while two users are in communication'. The settings can be selected depending on the preceding states of the switches.

First, in the 'wait' state in which the mobile telephone terminal is in a wait state, the control unit 55 sets all of the switches (SW#1 to SW#10) 31 to 40 in the OFF position. When the mobile telephone terminal receives an incoming call (step S1 shown in FIG. 3), it enters the 'phone-answering message recording information message' state (step S5 shown in FIG. 3) if the settings refer to a phone-answering message (step S2 shown in FIG. 3).

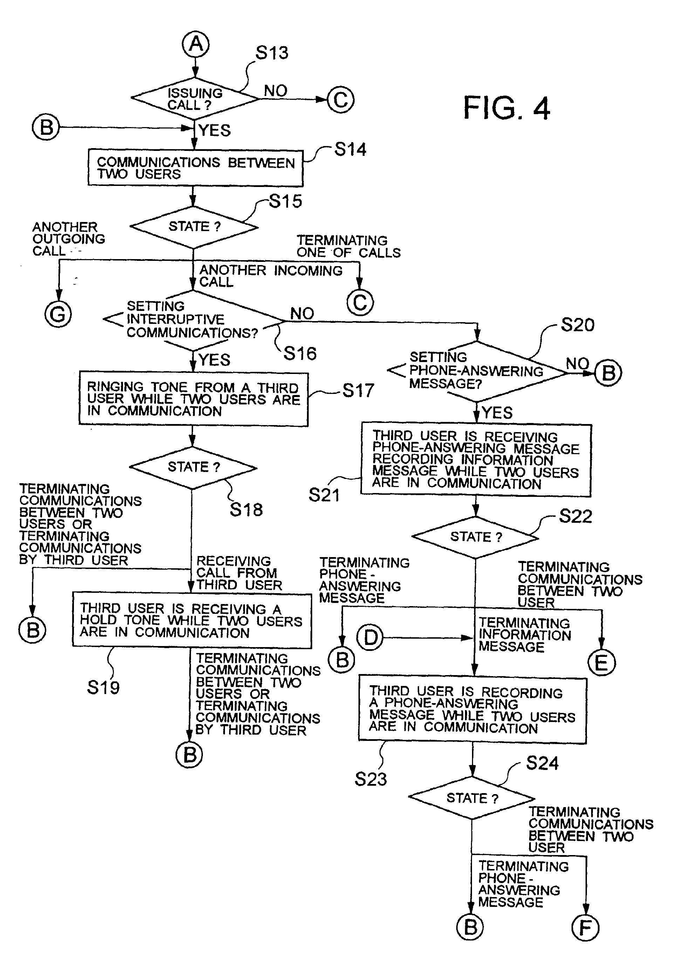

If the phone-answering message is not set for the mobile telephone terminal (step S2 shown in FIG. 3), then it enters a calling (receiving an incoming call) state (step S3 shown in FIG. 3). On the other hand, when a user calls a mobile telephone terminal (step S13 shown in FIG. 4), it enters the 'two users in communication' state (step S14 shown in FIG. 4).

When a mobile telephone terminal receives an incoming call, and calls the user in an 'incoming call' state (step S3 shown in FIG. 3), an incoming call announcement melody starts or a vibration device (not shown in the attached drawings) enters a vibration mode.

When the calling person terminates the communications in the above mentioned states (step S4 shown in FIG. 3), the mobile telephone terminal enters the 'wait' state. If the user receives a call (step S4 shown in FIG. 3), the mobile telephone terminal enters the 'two users in communication' (step S14 shown in FIG. 4). In the 'incoming call' state, the control unit 55 sets all the switches (SW#1 to SW#10) 31 to 40 in the OFF position.

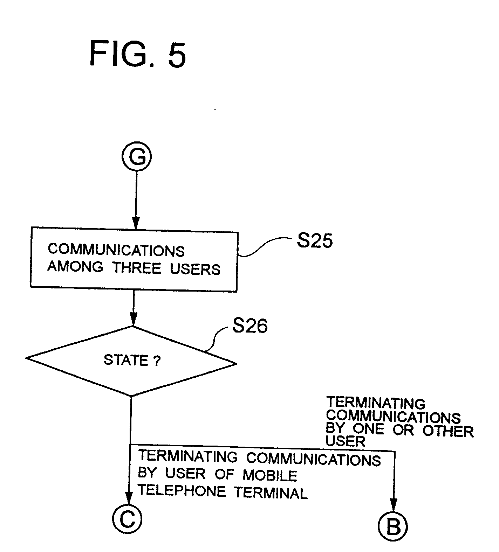

If a call is issued in the mobile telephone terminal, and the terminal enters the one-to-one communicating state, that is, the 'two users in communication' state (step S14 shown in FIG. 4), and the user issues another call (step S15 shown in FIG. 4), then the terminal enters the 'three users in communication' state (step S25 shown in FIG. 5).

If the mobile telephone terminal further receives an incoming call (step S15 shown in FIG. 4), and the setting refers to an interruptive communication (step S16 shown in FIG. 4), then the terminal enters the 'ringing tone from a third user while two users are in communication' state (step S17 shown in FIG. 4).

If the setting of the mobile telephone terminal does not refer to an interruptive communication (step S16 shown in FIG. 4), but a 'phone-answering message' state (step S20 shown in FIG. 4), then the terminal enters the 'third user is receiving phone-answering message recording information message while two users are in communication' (step S21 shown in FIG. 4). If the mobile telephone terminal does not indicate a phone-answering message (step S20 shown in FIG. 4), then no more call is issued, thereby entering the 'two users in communication' state (step S14 shown in FIG. 4).

In the 'two users in communication' state, the control unit 55 sets the switch (SW#1) 31 and the switch (SW#5) 35 in the ON position, or sets the switch (SW#2) 32 and the switch (SW#6) 36 in the ON position, thereby enabling the one-to-one voice communications with one call issued.

If two calls are issued in the mobile telephone terminal and the mobile telephone terminal enters the 'three users in communication' state in which three users are simultaneously in communication (step S25 shown in FIG. 5), and the user terminates the communication (step S26 shown in FIG. 5), then two calls are disconnected, thereby entering the 'wait' state. Furthermore, if anybody other than the communicating user terminates the communication (step S26 shown in FIG. 5), then there is one call existing, and the terminal enters the 'two users in communication' state (step S14 shown in FIG. 4).

In the 'three users in communication' state, the control unit 55 sets the switch (SW#1) 31, the switch (SW#2) 32, the switch (SW#5) 35, the switch (SW#6) 36, the switch (SW#7) 37, and the switch (SW#8) 38 in the ON position, and the audio signals #1 and #2 are compounded by the audio mixer unit 44 through the switch (SW#1) 31 and the switch (SW#2) 32, and the compounded voice is transmitted to the user through the receiver 47.

The control unit 55 inputs the audio signal #3 of the user from the microphone 51 to the audio mixer units 45 and 46 through the distributor 50, the switch (SW#5) 35, and the switch (SW#6) 36. Additionally, the control unit 55 allows the audio signal #1 to be compounded with the audio signal #3 by the audio mixer unit 46 through the switch (SW#8) 38, and transmitted to a call with the audio signal #2.

Furthermore, the control unit 55 allows the audio signal #2 to be compounded with the audio signal #3 by the audio mixer unit 45 through the switch (SW#7) 37, and transmitted to a call with the audio signal #1. Thus, the user can simultaneously hear the voice of the two parties in communications, and the two parties in communications can simultaneously hear the others' voice.

If the mobile telephone terminal is in the 'phone-answering message recording information message' state (step S5 shown in FIG. 3) in which the 'phone-answering message recording information message' such as 'I cannot answer your phone now. Please leave your message after the beep. - a beep -', etc. is output to a user who is issuing a call to the mobile telephone terminal, and the user receives the call while the message is being output (step S6 shown in FIG. 3), then the mobile telephone terminal enters the 'two users in communication' state (step S14 shown in FIG. 4).

When the 'phone-answering message recording information message' is completed in the mobile telephone terminal (step S6 shown in FIG. 3), the terminal enters the 'user is recording phone-answering message' state (step S7 shown in FIG. 3). Furthermore, when the user or a person who is issuing a call to the mobile telephone terminal completes the communications (step S6 shown in FIG. 3), then the terminal enters the 'wait' state.

In the 'phone-answering message recording information message' state, a call is issued, the control unit 55 sets the switch (SW#9) 39 and the switch (SW#10) 40 in the ON position, generates a 'phone-answering message recording information message' from the voice generator 52 or the voice generator 53, and transmits the message as the audio signal #4 or #5 to the person who is transmitting a call to the mobile telephone terminal.

In the 'one user is recording a phone-answering message' state in which the mobile telephone terminal is recording the voice of a person to record a phone-answering message on the terminal of the user (step S7 shown in FIG. 3), when the user issues a call to another person (step S8 shown in FIG. 3), another call is issued, and the terminal enters the 'third user is recording a phone-answering message while two users are in communication' state (step S23 shown in FIG. 4).

When the mobile telephone terminal receives a call (step S8 shown in FIG. 3), it enters the 'two users in communication' state (step S14 shown in FIG. 4). When the mobile telephone terminal receives an incoming call in the above mentioned state (step S8 shown in FIG. 3), it enters the 'user is recording phone-answering message while a phone-answering message recording information message is transmitted to another user' state (step S9 shown in FIG. 3). Furthermore, when the user or a person recording a phone-answering message on the mobile telephone terminal terminates the communications (step S8 shown in FIG. 3), then it enters the 'wait' state.

In the 'one user is recording a phone-answering message' state, the control unit 55 sets the switch (SW#3) 33 or the switch (SW#4) 34 in the ON position, allows the audio signal #1 or the audio signal #2 to be input into the audio recording unit 48 or 49 for recording.

If the mobile telephone terminal receives two calls, that is, enters the 'user is recording phone-answering message while a phone-answering message recording information message is transmitted to another user' state in which one user is recording a phone-answering message, and another user is listening to the 'phone-answering message recording information message' (step S9 shown in FIG. 3), and if it receives a call indicating 'one user is recording a phone-answering message' or a call indicating a 'phone-answering message recording information message' (step S10 shown in FIG. 3), then it enters the 'third user is recording a phone-answering message while two users are in communication' state (step S23 shown in FIG. 4).

When the person recording a phone-answering message terminates the communications (step S10 shown in FIG. 3), the mobile telephone terminal enters the 'phone-answering message recording information message' state (step S5 shown in FIG. 3). when the 'phone-answeringmessage recording information message' terminates (step S10 shown in FIG. 3), the mobile telephone terminal enters the 'two users are simultaneously recording phone-answering messages' state (step S11 shown in FIG. 3).

Furthermore, when the call for the 'phone-answeringmessage recording information message' terminates the communications (step S10 shown in FIG. 3), then the mobile telephone terminal enters the 'recording a phone-answering message' state (step S7 shown in FIG. 3).

In the 'user is recording phone-answering message while a phone-answering message recording information message is transmitted to another user' state, the control unit 55 sets the switch (SW#4) 34 and the switch (SW#9) 39 in the ON position, or sets the switch (SW#3) 33 and the switch (SW#10) 40 in the ON position, records the phone-answering message through a call on the audio recording unit 48 or 49 through the switch (SW#3) 33 or the switch (SW#4) 34, and transmits the 'phone-answering message recording information message' to the user on the other end of the phone through another call from the voice generator 52 or the voice generator 53 through the switch (SW#10) 40 or the switch (SW#9) 39.

In the 'two users are simultaneously recording phone-answering messages' state in which two calls are received by the mobile telephone terminal and the two users are simultaneously and individually recording phone-answering messages (step S1 shown in FIG. 3), if the user of the mobile telephone terminal receives one of the calls (step S12 shown in FIG. 3), the terminal enters the 'third user is recording a phone-answering message while two users are in communication' state (step S23 shown in FIG. 4). If any of the calls terminates the communications in the mobile telephone terminal (step S12 shown in FIG. 3), the terminal enters the 'one user is recording a phone-answering message' state (step S7 shown in FIG. 3).

In the 'two users are simultaneously recording phone-answering messages' state, the control unit 55 sets the switch (SW#3) 33 and the switch (SW#4) 34 in the ON position, and allows the audio signal #1 and #2 to be recorded on the audio recording units 48 and 49 through the switch (SW#3) 33 and the switch (SW#4) 34.

If the mobile telephone terminal enters the 'ringing tone from a third user while two users are in communication' state in which the mobile telephone terminal receives two calls, that is, one call enters the 'two users in communication' state, and another call is being called by the third user (step S17 shown in FIG. 4), and if the user of the mobile telephone terminal or one of the two users terminates the communications or the calling third user terminates the communications (step S18 shown in FIG. 4), then the mobile telephone terminal enters the state of 'one call is in communication' (step S14 shown in FIG. 4).

When the mobile telephone terminal receives the call from the third user (step S18 shown in FIG. 4), then a hold tone is transmitted to the user on the other end of the mobile telephone terminal, and the user of the mobile telephone terminal enters the communicating state with the third user. Thus, the mobile telephone terminal enters the 'third user is receiving a hold tone while two users are in communication' state (step S19 shown in FIG. 4).

In the 'ringing tone from a third user while two users are in communication' state, the control unit 55 sets the switch (SW#1) 31, the switch (SW#2) 32 and the switch (SW#5) 35, or sets the switch (SW#1) 31, the switch (SW#2) 32, and the switch (SW#6) 36 in the ON position.

In the call in the communicating state, the audio signal #1 or #2 is transmitted from the receiver 47 to the user through the switch (SW#1) 31 or the switch (SW#2) 32, and the audio signal #3 is transmitted to the user on the other end of the phone from the microphone 51 through the distributor 50, the switch (SW#5) 35 or the switch (SW#6) 36.

At this time, if the voice of the call in the communicating state is the audio signal #1, the ringing tone is the audio signal #2, and is compounded with the audio signal #1 by the audio mixer unit 44 through the switch (SW#2) 32, and is transmitted from the receiver 47 to the user.

If the voice of the call in the communicating state is the audio signal #2, the ringing tone is the audio signal #1, and is compounded with the audio signal #2 by the audio mixer unit 44 through the switch (SW#1) 31, and is transmitted from the receiver 47 to the user.

If the mobile telephone terminal enters the 'third user is receiving a hold tone while two users are in communication' state in which one call enters the 'two users in communication' state, and another call enters the 'third user is receiving a hold tone while two users are in communication' state in which a hold tone is transmitted to the person on the other end of the phone (step S19 shown in FIG. 4), the user of the mobile telephone terminal and the person on hold when the two users in communication terminate the communication enter the communicating state, and when the person on hold terminates the communications, the 'two users in communication' continue the communication in the 'two users in communication' state (step S14 shown in FIG. 4).

In the 'third user is receiving a hold tone while two users are in communication' state, the control unit 55 sets the switch (SW#1) 31, the switch (SW#5) 35, and the switch (SW#10) 40, or sets the switch (SW#2) 32, the switch (SW#6) 36, and the switch (SW#9) 39 in the ON position.

In the call in the communicating state, the audio signal #1 or the audio signal #2 is transmitted from the receiver 47 to the user through the switch (SW#1) 31 or the switch (SW#2) 32, and the audio signal #3 of the user is transmitted from the microphone 51 to the user on the other end of the phone through the switch (SW#5) 35 or the switch (SW#6) 36. For the calls on hold, a hold tone is transmitted as the audio signal #4 or #5 to the call not in communication from the voice generator 52 or 53 through switch (SW#9) 39 or the switch (SW#10) 40.

If the mobile telephone terminal enters the 'third user is receiving phone-answering message recording information message while two users are in communication' state, and if one call is in the 'two users in communication' state, and another call enters the 'third user is receiving phone-answering message recording information message while two users are in communication' state such as the state of receiving a message that 'I cannot answer your phone now. Please leave your message after the beep. - a beep -' state (step S21 shown in FIG. 4), then the terminal enters the 'two users in communication' state when the call receiving the 'phone-answering message recording information message' terminates (step S22 shown in FIG. 4) (step S14 shown in FIG. 4).

When the 'phone-answering message recording information message' terminates in the mobile telephone terminal (step S22 shown in FIG. 4), the terminal enters the 'third user is recording a phone-answering message while two users are in communication' state (step S23 shown in FIG. 4).

Furthermore, when the mobile telephone terminal terminates the call in the 'two users in communication' state (step S22 shown in FIG. 4), the 'phone-answering message recording informationmessage' continues. As a result, the terminal enters the 'phone-answering message recording information message' state (step S5 shown in FIG. 3).

In the 'third user is receiving phone-answering message recording information message while two users are in communication' state, the control unit 55 sets the switch (SW#1) 31, the switch (SW#5) 35, and the switch (SW#10) 40, or set the switch (SW#2) 32, the switch (SW#6) 36, and the switch (SW#9) 39 in the ON position.

In the call in the communicating state, the audio signal #1 or #2 is transmitted from the receiver 47 to the user through the switch (SW#1) 31 or the switch (SW#2) 32, and the audio signal #3 of the user is transmitted from the microphone 51 to the user on the other end of the phone through the distributor 50 and the switch (SW#5) 35 or switch (SW#6) 36.

In the call on hold, a 'phone-answering message recording information message' is transmitted as the audio signal #4 or #5 to the call not in communication from the voice generator 52 or 53 through the switch (SW#9) 39 or the switch (SW#10) 40.

If the mobile telephone terminal enters the 'third user is recording a phone-answering message while two users are in communication' state in which one call enters the 'two users in communication' state, and the third user in another call enters the 'recording a phone-answering message' state (step 523 shown in FIG. 4), a call in the 'two users in communication' state continues if the recording a phone-answering message terminates (step S24 shown in FIG. 4), and enters the 'two users in communication' state (step S14 shown in FIG. 4).

If the 'communications between two users' terminates in the mobile telephone terminal (step S24 shown in FIG. 4), recording a phone-answering message continues, and the terminal enters the 'user is recording phone-answering message' state (step S7 shown in FIG. 3).

In the 'third user is recording a phone-answering message while two users are in communication' state, the control unit 55 sets the switch (SW#1) 31, the switch (SW#4) 34, and the switch (SW#5) 35 in the ON position, or sets the switch (SW#2) 32, the switch (SW#3) 33, and the switch (SW#6) 36 in the ON position.

In the call in the communicating state, the audio signal #1 or #2 is transmitted from the receiver 47 to the user through the switch (SW#1) 31 or the switch (SW#2) 32, and the audio signal #3 of the user is transmitted from the microphone 51 to the user on the other end of the phone through the distributor 50 and the switch (SW#5) 35 or switch (SW#6) 36.

The voice by which a phone-answering message is recorded is recorded on the audio recording unit 49 through the switch (SW#4) 34 if the audio signal from the user on the other end of the phone in communication is transmitted through the switch (SW#1) 31, and on the audio recording unit 48 through the switch (SW#3) 33 if the audio signal from the user on the other end of the phone in communication is transmitted through the switch (SW#2) 32.

Thus, using the above mentioned mobile telephone terminal in the communications system with the multicalling capability, various services such as a voice message record service, an interruptive communications service, a plural users communications service, etc. in communication can be realized only using a terminal without increasing dedicated lines independent of the equipment on the network side.

Thus, it is not necessary for a user to request a communications carrier to set various services. For example, it is not necessary to pay a monthly fee, etc. for each of the various services.

Furthermore, since various services can be freely switched and set on the terminal side, the value added of a terminal can be enhanced, and these capabilities can be transferred from the network side to the terminal side, thereby simplifying the call connecting process when a service is offered, reducing the laborious processes such as changing settings by a user request, etc. As a result, high cost performance can be achieved in designing and maintaining a network.

Therefore, according to the present embodiment, the configuration of a network can be simplified, and the load charged when lines are exchanged can be reduced, thereby requiring no request to a communications carrier to set a useful service or no payment of monthly fee for each of the various services.

Furthermore, by adding these functions to a mobile telephone terminal, the value added to the terminal can be enhanced, thereby greatly contributing to the CS (customer satisfaction) of a user.

In the explanation above, two calls are established. If the system is configures such that three calls can be established, the voice message record service can be offered in the foursome communications and threesome communications.

With the above mentioned configuration of the mobile telephone terminal simplified, a terminal normally capable of communicate in the interruptive communications service in addition to the normal communications between two users in communication', a terminal capable of communications between three users, a terminal capable of only a phone-answering message, etc. can be realized.

Furthermore, the present embodiment can be applied to an information terminal apparatus connected to a wired or wireless circuit [for example, a telephone, a personal computer, a PDA (personal digital assistants), etc.]. However, it is necessary that the wired or wireless circuit corresponds to the above mentioned multiplexed communications.

In the multicalling capability, two or more audio multicalls are not permitted in the standard specifications [3GPP (third generation partnership projects) release 1999], but other combinations, for example, an audio call and an unrestricted call, and an audio call and a multimedia call, etc. are permitted, thereby simultaneously providing a user with various multimedia services.

Therefore, using a mobile telephone terminal, not only a message from a third user can be voice-recorded in the communications between two users, but also a message from a third user can be recorded using an unrestricted call and a multimedia call [data communications based on the IP (Internet protocol)], and a message from a third user including a still image and a moving picture can be recorded.

It is possible to provide a service for a TV conference, etc. as various multimedia services for a user. However, in this case, it is necessary to process a still image and a moving image by the audio mixer units 44 to 46, audio recording units 48 and 49, and the voice generator 52 and 53, and it is also necessary for the display unit to perform a divisional display. However, the processes are the same as those shown in FIGS. 3 to 5.

The present invention is not limited to the above mentioned embodiment, and the above mentioned embodiment can be applied to each system according to the embodiment of the present invention, and the above mentioned functions can be applied solely or in combination.

As explained above, the present invention is a mobile telephone terminal in which a terminal has a multicalling capability of communicating with a plurality of lines and communicates with other terminals by a code division multiple connection system. The terminal offers a voice message record service for freely recording a message from a calling terminal in an off-hook state or in communication, and an interruptive communications service for freely communicating with a further terminal while communicating with another terminal. Also by offering a plural users communications service of freely communicating with a plurality of terminals, it simplifies a call connecting process, reduces the load in switching lines, requesting a communications carrier to set an available service, etc. without a monthly fee, etc. for each service and without increasing a dedicated lines when a service is offered.

## Claims

1. An information terminal apparatus, for communicating with another terminal by means of multiplexed communication that provides communication from one terminal through a plurality of lines, comprising:
message record servicing means, in an off-hook state or in communication, for freely recording a message from a calling terminal; and
interruptive communications servicing means for freely communicating with a further terminal while communicating with another terminal.

2. The information terminal apparatus according to claim 1, wherein
said apparatus is a mobile telephone terminal having a multicalling capability by which one terminal can establish communications through a plurality of lines, and performing the communications with said another terminal in a code division multiple access system.

3. The apparatus according to claim 1 or 2,
wherein
said interruptive communications servicing means comprises: communications hold notification means for notifying a terminal in communication of hold of the communication; and
means for switching the communication with the other terminal in the communication into communication with a terminal that is calling.

4. The information terminal apparatus according to claim 3,
wherein
said communications hold notification means gives a notification of the hold of the communications by a voice message or a specific tone.

5. The information terminal apparatus according to claim
1, 2, 3 or 4, further comprising
plural users communications servicing means for freely communicating with a plurality of terminals.

6. An information terminal apparatus, for communicating with another terminal by means of multiplexed communication that provides communication from one terminal through a plurality of lines, comprising:
message record servicing means, in an off-hook state or in communication, for freely recording a message from a calling terminal; and
plural users communications servicing means for freely communicating with a plurality of terminals, wherein
said apparatus is a mobile telephone terminal having a multicalling capability by which one terminal can establish communications through a plurality of lines, and performing the communications with said another terminal in a code division multiple access system.

7. The apparatus according to any one of claims 2 to 6
wherein
said message record servicing means can perform a voice message record service of freely recording a message from the calling terminal.

8. The information terminal apparatus according to claim 7,
wherein
said message record servicing means comprises:
voice generation means for giving by voice a notice of information about the voice message record service;
audio recording means for recording a message from the other terminal; and
means for inputting into said audio recording means an audio signal from any of a plurality of terminals depending on communications states from the plurality of terminals by the multicalling capability.

9. The information terminal apparatus according to claim 8,
wherein
said message record servicing means freely records audio signals from all terminals except a terminal in communication in the plurality of terminals on said audio recording means.

10. The apparatus according to any one of claims 1 to 9,
wherein
said message record servicing means freely records audio signals transmitted in data communications from all terminals except a terminal in communication in the plurality of terminals.

11. The apparatus according to any one of claims 1 to 10,
wherein
said message record servicing means offers a message and image record service of freely recording a message and an image from the other terminal.

12. The information terminal apparatus according to claim 11,
wherein
said message record servicing means comprises:
voice generation means for giving by voice a notice of information about the message and image record service;
recording means for recording a message and an image from the calling terminal; and
means for inputting into said recording means a message and an image from any of a plurality of terminals depending on communications states from the plurality of terminals.

13. The information terminal apparatus according to claim 12,
wherein
said message record servicing means freely records amessage and an image from all terminals except a terminal in communication in the plurality of terminals on said recording means.

14. The apparatus according to any one of claims 5 to 13,
wherein
said plural users communications servicing means comprises:
first composing means for composing an audio signal from a plurality of terminals; and
a plurality of second composing means for composing an audio signal from all terminals except a destination terminal in the plurality of terminals with an audio signal issued from a terminal of said apparatus.

15. The apparatus according to any one of claims 1 to 14, further comprising
plural member conference servicing means for freely communicating voice and images among a plurality of terminals.

16. The information terminal apparatus according to claim 15,
wherein
said plural member conference servicing means comprises:
first composing means for composing voice and images from a plurality of terminals; and
a plurality of second composing means for composing voice and images from all terminals except a destination terminal in the plurality of terminals with voice and images issued from a terminal of said apparatus.

17. An information terminal apparatus, for communicating with another terminal by means of multiplexed communication that provides communication from one terminal through a plurality of lines, comprising:
message record servicing means, in an off-hook state or in communication, for freely recording a message from a calling terminal; and
plural users communications servicing means for freely communicating among a plurality of terminals.

18. A communications method using an information terminal apparatus, for communicating with another terminal by means of multiplexed communication that provides communication from one terminal through a plurality of lines, comprising:
a step, in an off-hook state or in communication, of offering a message record service for freely recording a message from a calling terminal; and
a step of offering an interruptive communications service for freely communicating with a further terminal while communicating with another terminal.

19. The method according to claim 18, wherein
said step of offering an interruptive communications service comprises:
a step of notifying a terminal in communication of hold of the communication; and
a step of switching the communication with the terminal in communication into communication with a terminal that is calling.

20. The communications method according to claim 19, wherein
said step of giving a notice of hold of communications gives a notification of the hold of the communications by avoice message or a specific tone.

21. The method according to claim 18, 19 or 20, further
comprising
a step of offering a plural users communications service of freely communicating with a plurality of terminals.

22. A communications method using an information terminal apparatus, for communicating with another terminal by means of multiplexed communication that provides communication from one terminal through a plurality of lines, comprising:
a step, in an off-hook state or in communication, of offering a message record service for freely recording a message from a calling terminal; and
a step of offering a plural users communications service for freely communicating among a plurality of terminals.

23. The method according to any one of claims 18 to 22, wherein
a mobile telephone terminal having a multicalling capability by which one terminal can establish communications through a plurality of lines, and performing the communications with said another terminal in a code division multiple access system is used.

24. The communications method according to claim 23, wherein
said step of offering a message record service can perform a voice message record service of freely recording a message from the other terminal.

25. The communications method according to claim 24, wherein
said step of offering a message record service comprises:
a step of giving by voice from voice generation means a notice of information about the voice message record service; and
a step of recording on audio recording means a message from the other terminal; and
an audio signal is input into the audio recording means from any of a plurality of terminals depending on communications states from the plurality of terminals by the multicalling capability.

26. The communications method according to claim 25, wherein
said step of offering amessage record service freely records audio signals from all terminals except a terminal in communication in the plurality of terminals on the audio recording means.

27. The method according to any one of claims 18 to 26, wherein
said step of offering a message record service freely records audio signals transmitted in data communications from all terminals except a terminal in communication in the plurality of terminals.

28. The method according to any one of claims 18 to 27, wherein
said step of offering a message record service offers a message and image record service of freely recording a message and an image from the other terminal.

29. The communications method according to claim 28, wherein said step of offering a message record service comprises:
a step of giving by voice from voice generation means a notice of information about the message and image record service; and
a step of recording a message and an image from the calling terminal; and
a message and an image from any of a plurality of terminals are input into the recording means depending on communications states from the plurality of terminals.

30. The communications method according to claim 29, wherein
said step of offering amessage record service freely records a message and an image from all terminals except a terminal in communication in the plurality of terminals on the recording means.

31. The method according to any one of claims 18 to 30, wherein
said step of offering a plural users communications service composes an audio signal from a plurality of terminals using a first composing means, and composes an audio signal issued from all terminals except a destination terminal in the plurality of terminals with an audio signal issued from a terminal of said apparatus using a corresponding composing means in a plurality of second composing means.

32. The method according to any one of claims 18 to 31, wherein
a plural member conference service of freely communicating voice and images among a plurality of terminals is offered.

33. The communications method according to claim 32, wherein
in the plural member conference service, a first composing means composes voice and images from a plurality of terminals, and a corresponding composing means in a plurality of second composing means composes voice and images issued from all terminals except a destination terminal in the plurality of terminals with voice and images issued from a terminal of said apparatus.

34. A communications method using an information terminal apparatus, for communicating with another terminal by means of multiplexed communication that provides communication from one terminal through a plurality of lines, comprising:
a step, in an off-hook state or in communication, of offering a message record service for freely recording a message from a calling terminal; and
a step of offering a plural users communications service for freely communicating among a plurality of terminals.

35. A storage medium storing a program of a communications method using an information terminal apparatus, for communicating with another terminal by means of multiplexed communication that provides communication from one terminal through a plurality of lines, comprising:
a process, in an off-hook state or in communication, of offering a message record service for freely recording a message from a calling terminal; and
a process of offering an interruptive communications service for freely communicating with a further terminal while communicating with another terminal.

36. The storage medium according to claim 35, wherein
said computer is allowed to perform a process of offering a plural users communications service for freely communicating among a plurality of terminals.

37. A storage medium storing a program of a communications method using an information terminal apparatus, for communicating with another terminal by means of multiplexed communication that provides communication from one terminal through a plurality of lines, comprising:
a process, in an off-hook state or in communication, of offering a message record service for freely recording a message from a calling terminal; and
a process of offering a plural users communications service for freely communicating among a plurality of terminals.
